# EUROPEAN PATENT APPLICATION

(11) **EP 1 845 706 A1**
(43) Date of publication of application: **17.10.2007**
(21) Application number: 06007653.6
(22) Date of filing: 12.04.2006
(51) Int. Cl.: H04N 3/15

(54) **Photo sensor with pinned photodiode and sub-linear response**

(71) Applicant: CSEM Centre Suisse d'Electronique et de Microtechnique SA, 2007 Neuchâtel (CH)
(72) Inventor: Seitz, Peter, 8902 Urdorf (CH); Lustenberger, Felix, 6330 Cham (CH)
(74) Representative: Blum, Rudolf Emil

(57) **Abstract**

A photo sensor exhibiting low noise, low smear, low dark current and high dynamic range consists of a pinned (or buried) photodiode (PPD) with associated transfer gate (TG), a reset circuit (3) and a device (SL) with sub-linear voltage-to-current characteristic. The exposure cycle is started by reverse biasing the buried photodiode to its pinning potential and by setting the transfer gate (TG) to a non-zero skimming potential. Photo-generated charge carriers start to fill the buried photodiode; if illumination intensity is high, excessive photocharges are flowing over the transfer gate (TG) to the sensing node. Because of the sub-linear device (SL) connected to the sensing node, the voltage at the sensing node is a sub-linear function of the illumination intensity, and hence the dynamic range of the pixel is increased. The voltage at the sensing node (Se) is read four times, namely before exposure, with the spilled-over photocharge, after reset, and after the photocharge in the buried photodiode has been transferred to the sensing node. This allows correlated multiple sampling techniques to be employed for eliminating reset noise. Because of its compact size, the photo sensor can be employed in one- and two-dimensional image sensors fabricated with industry-standard CMOS or CCD technologies.

## Description

### FIELD OF THE INVENTION

The present invention relates to solid-state photo sensors for low-noise, low-smear, low-dark-current, one-dimensional and two-dimensional image sensing, where it is necessary to increase the dynamic range. In particular, the invention relates to a photo sensor and method for operating a photo sensor having a pinned photodiode (PPD) and sub-linear response.

Further, the invention relates to CMOS (Complementary Metal Oxide Semiconductor) image sensors and to CCD (Charge Coupled Device) image sensors whose photosensitive devices consist of PPDs, and for which a higher dynamic range is desired than is possible with the known PPD device structures and operation.

### BACKGROUND

Conventional photodiodes as employed in CMOS image sensors suffer from a set of practical limitations such as elevated dark current densities in excess of 1 nA/cm2, image lag seen as after-images of bright parts in a scene, photocharge transfer loss due to subthreshold ionization, as well as kTC or reset noise due to the inability to employ correlated multiple sampling techniques, as described for example by E.C. Fox et al., "A High Speed Linear CCD Image Sensor With Pinned Photodiode Photosite for Low Lag and Low Noise Imaging", Proc. SPIE, Vol. 3301, pp. 17-26 (1998).

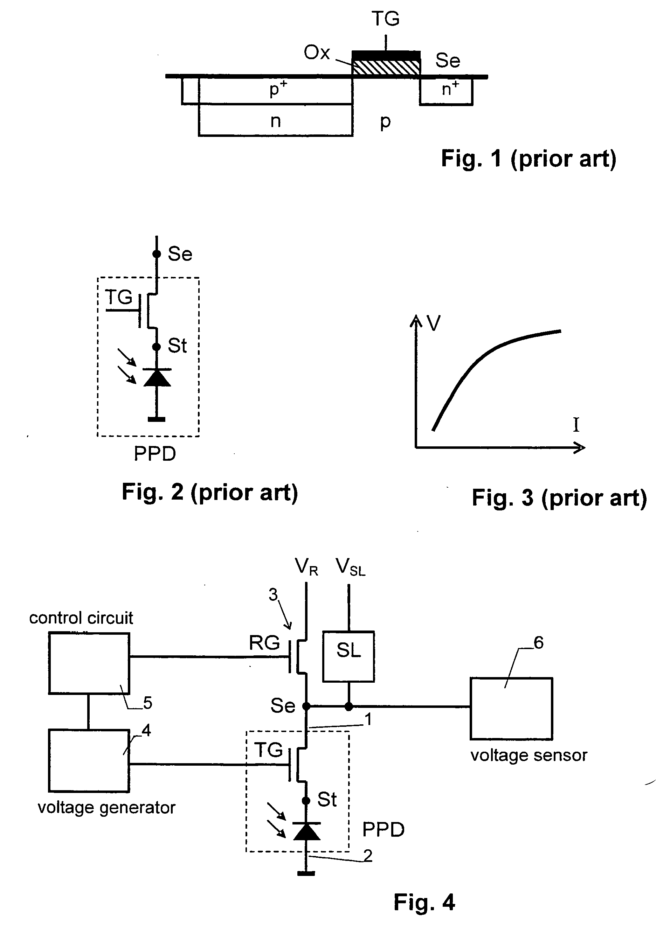

These limitations can be overcome by the use of a pinned (or buried) photodiode (PPD), as illustrated in Fig. 1. This figure shows a cross section of a pinned photodiode according to prior art. It consists of a lightly p-doped substrate, into which an n-doped well is diffused, followed by a highly doped p+ well of lesser depth. The p+ well is connected electrically to the substrate, effectively creating a buried pn-junction, whose cathode (the inner n-doped core) can be completely depleted. This buried cathode can only be accessed through a transfer gate TG, with which the photo-generated charge stored in the buried photodiode can be completely transferred to the charge sensing diffusion Se.

A PPD consists of a fully depleted region of semiconductor material, connected through a transfer gate (TG) to a photocharge sensing node (Se) or first terminal, as illustrated in Fig. 2, which shows the schematic diagram of a PPD according to Fig. 1, consisting of a buried photodiode and an associated transfer gate TG. The architecture of the PPD does not allow direct access to the buried cathode St, where the photo-generated charge is accumulated and stored; this fact is indicated with the dashed box around the PPD

The sensing node is connected to a charge detection circuit, commonly realized as a source follower, as for example described by I. Inoue et al., "Low-Leakage-Current, Low-Operating-Voltage Buried Photodiode for a CMOS Imager", Transactions on Electron Devices, Vol. 50, pp. 43-47 (2003).

Unfortunately, the advantages of the PPD structure are obtained at the expense of a reduced full-well charge and, therefore, a limited dynamic range of typically less than 80 dB (four orders of magnitude of illumination) is achieved.

In conventional photodiode pixels, these limitations of the dynamic range can be overcome with the use of a sub-linear device connected to the cathode of the photodiode, the so-called storage node, as taught for example in US patent No. 6,815,685 (M. Wäny et al., "Photodetector and method for detecting radiation") or US patent No. 6,921,891 (P. Seitz, "Photodetector with high dynamic range and increased operation temperature"). In the first case, a field effect transistor is used as the sub-linear device whereas in the second case, a diode serves the same purpose. In both cases, the voltage across the device is a logarithmic function of the current flowing through it. In general, such a sub-linear device is characterized by a functional voltage-to-current relationship in which the voltage across the device is a monotonous, convex (sub-linear) function of the current flowing through the device, as illustrated schematically in Fig. 3, which is a schematic illustration of the voltage-to-current characteristic of a sub-linear device: The voltage across the device is a monotonous, convex (sub-linear) function of the current flowing through the device.

These devices operate according to the following principle: Once the voltage on the photodiode's cathode has reached a certain level due to linear discharging of the reverse-biased photodiode through a photocurrent, the sub-linear device starts to conduct, and a part of the photocurrent escapes from the storage node.

However, this solution cannot be adopted for PPDs because the storage node (St) of a PPD is internal to the device, and it cannot be accessed externally, as illustrated in Figure 2. To read out the photo-generated charge, it must be transferred to the photocharge sensing node (Se), by making use of the PPD's transfer gate (TG).

### SUMMARY OF THE INVENTION

As a consequence, it would be desirable to provide a photo sensor offering the advantages of a PPD over a conventional photodiode, but whose dynamic range can be increased over the inherent limitations of a PPD, reaching values that can be achieved with conventional photodiodes.

A further object of the invention is to provide a method to accomplish the readout of such a photo sensor in a fashion that exploits its desirable properties without lowering its attainable performance.

This object is achieved by the sensor and method of the independent claims.

Accordingly, in addition to the PPD, the sensor comprises a sub-linear device in series to the PPD, as well as a voltage generator for feeding a control voltage to the transfer gate of the PPD.

The sub-linear device is of the type mentioned above, i.e. the voltage drop over the sub-linear device depends in sub-linear fashion on the current through the device.

The voltage generator is adapted to generate at least two different voltages, namely
- a switch-on voltage for removing all the photogenerated charge carriers in the active region of the PPD, and
- a skimming voltage, lying between the switch-on voltage and a voltage at the second terminal of the PPD, which partially opens the transfer gate.

Such a device comprises the required elements for generating a signal that depends in sub-linear fashion on the incoming light intensity.

In particular, the device can be operated in two phases, which may e.g. be part of repetitive measurement cycles.

The first phase comprises the following steps
a) bringing the first terminal (i.e. the sensing node) of the PPD to a predefined voltage in order to reset it,
b) applying the skimming voltage to the transfer gate of the PPD,
c) when the voltage at the first terminal falls below a given threshold, feeding a current to the first terminal, by means of the sub-linear device, wherein the current increases superlinearly with a difference between the voltage at the first terminal and the threshold.

Hence, in the first phase, if the illumination is high, carriers will start to spill over to the first gate (sensing node), where the sub-linear device will make sure that the voltage drops in sub-linear fashion depending on the integrated light intensity.

The second phase comprises the following steps
d) again bringing the first terminal (the sensing node) to the predefined voltage,
e) applying the switch-on voltage to the transfer gate for removing all the remaining charge carriers.

Hence, in the second phase, all remaining charge carriers are brought to the first terminal (sensing node) where they can be measured as a voltage.

The method further comprises the steps of measuring the change of the voltage at the first terminal in both phases, thereby deriving a first and a second voltage change. The sum of these voltage changes is a sub-linear measure of the intensity integrated of the both measuring phases. Since it is based on subsequent subtractive measurements of the voltage over the PPD, it does not suffer from kTC noise.

The sensor has the potential to offer, at the same time, low noise, low image lag and smear, low dark current and a high dynamic range. It can be employed with known CCD and CMOS image sensor addressing and readout architectures.

It is suitable for application in one- and two-dimensional image sensors exhibiting the same desired characteristics of low noise, low image lag and smear, low dark current and a high dynamic range.

### DESCRIPTION OF THE FIGURES

The invention will be better understood and objects other than those set forth above will become apparent when consideration is given to the following detailed description thereof. Such description makes reference to the annexed drawings, wherein:
Fig. 1 is a sectional view of a pinned photodiode,
Fig. 2 is a replacement circuit diagram of the PPD,
Fig. 3 shows the sub-linear voltage-current characteristics of the sub-linear device,
Fig. 4 is a basic circuit diagram of a photo sensor according to the present invention,
Fig. 5 shows various voltages in the sensor over one measuring cycle in linear mode,
Fig. 6 shows various voltages in the sensor over one measuring cycle in sub-linear mode
Fig. 7 shows a first embodiment of the device,
Fig. 8 shows a second embodiment of the device,
Fig. 9 shows a third embodiment of the device, and
Fig. 10 shows the embodiment of Fig. 7 with circuitry for row and column-wise read-out in a two-dimensional array of sensors.

### MODES FOR CARRYING OUT THE INVENTION

Definition: In a strict sense, a sub-linear function is a function whose second derivative is always negative (convex curve), while a super-linear function is a function whose second derivative is always positive (concave curve). In the present context, though, a device is considered to be sub-linear (or super-linear, respectively) if the second derivative of its voltage-current (current-voltage) characteristic is negative (positive) only over a substantial part of its operating range and zero elsewhere. However, a sub-linear (super-linear) behavior in the strict sense is advantageous.

The basic operation of the photo sensor is illustrated by reference to Figs. 4, 5 and 6.

As can be seen from Fig. 4, the photo sensor comprises a pinned photodiode PPD according to prior art having a first terminal 1 (photocharge sensing node), a second terminal 2 (anode) and a transfer gate TG. First terminal 1 is connected to the buried cathode of the PD through the transfer gate TG. Connected to first terminal 1 and in series to the PPD, there are a reset circuit 3 formed by a transistor RG and a sub-linear device SL. Reset circuit 3 is connected to a reset voltage V_{R}, sub-linear device SL to a sub-linear voltage V_{SL}.

The gate voltage to control transfer gate TG is generated by a voltage generator 4. A control circuit 5 is provided for controlling the operation of voltage generator 4 and reset circuit 3. A voltage sensor 6 controlled by control circuit 5 measures the voltage at first terminal 1 at predefined times as described below.

As mentioned, the photo sensor is operated in measuring cycles, each cycle comprising two phases.

In the first phase, control circuit 5 operates voltage generator 4 to apply a skimming voltage V_{S} to the transfer gate TG. This skimming voltage must be larger than zero (i.e. larger than the anode voltage of the PPD) and lower than V_{R}, since it is acting as a barrier or skimming potential, over which excessive photo-generated charge carriers can escape from the PPD's storage node St to the first terminal 1 and the charge sensing node Se, as detailed below.

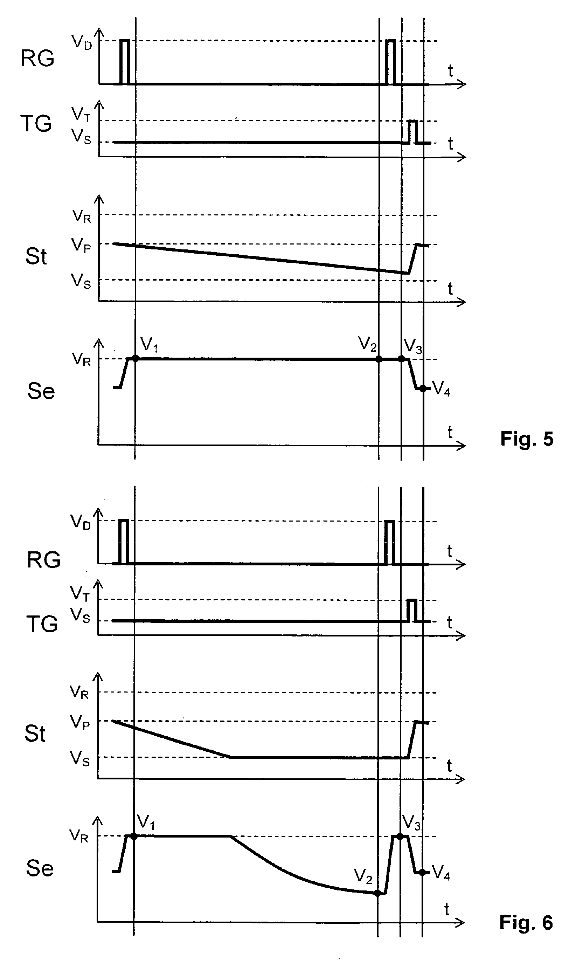

Then, and as illustrated in Figs. 5 and 6, control circuit 5 issues a first reset command by shortly pulsing reset transistor RG to its conducting state, until the charge sensing node Se has been reset to the potential V_{R}. Right afterwards, the voltage at node Se is sampled by voltage sensor 6 for the first time, and the acquired value V₁ is stored either in analog or in digital form. Afterwards, the pixel is exposed to the incident radiation during a suitable period, the so-called exposure time. The exposure time ends with a second sampling of the voltage at node Se, producing the value V₂ in voltage sensor 6 which is stored either in analog or in digital form.

In the second phase, a second reset operation follows, during which control circuit 5 issues a second reset command by shortly pulsing reset transistor RG to its conducting state, until the charge sensing node Se has been reset to the potential V_{R}. Right afterwards, the voltage at node Se is sampled for the third time and the acquired value V₃ is stored either in analog or in digital form. Then the transfer gate TG is shortly pulsed high to a switch-on voltage V_{T} which is slightly above the PPD's pinning potential V_{P}, so that the photocharge accumulated on the PPD's storage node St is fully transferred to the charge sensing node Se. Right afterwards, the voltage at node Se is sampled for the fourth time and the acquired value V₄ is stored either in analog or in digital form.

After this operation, the photo sensor according to the present invention is ready to start the above described operational sequence again.

The four voltages V₁,...,V₄, can be employed to obtain low-noise measures of the photo-generated charge QSt stored in the PPD on the node St and the photo-generated charge QSe spilled over the transfer gate TG into the node Se. One of the most important sources of noise in solid-state image sensors is reset (or kTC) noise. It originates in the resetting process using a reset transistor. For this reason, it is desirable to make two or more measurements to determine the photo-generated charge packet, a first one right after the reset operation, the other ones after the photocharge has been deposited, as described for example by G.R. Hopkinson and H. Lumb, "Noise reduction techniques for CCD image sensors", J. Phys. E : Sci. Instrum., Vol. 15, pp. 1214-1222 (1982). In the case of two measurements, their difference gives a reset-noise-free measure of the photo-generated charge, as desired. If two measurements are employed and an appreciable time period of more than a few microseconds lies between the measurements, the technique is called "double sampling" (DS); if the two measurements follow each other within a shorter time period, the technique is called "correlated double sampling" (CDS).

Consequentially, the photo-generated charge QSe can be measured with a CDS technique by determining the voltage change V₄ - V₃ , and the photo-generated charge QSt can be measured with a DS technique by determining the voltage change V₂ - V₁ .

If the illumination level is so low that the PPD full well capacity is not fully utilized by the photo-generated charge during the exposure time, no photo-generated charge will spill from the charge storage node St over the transfer gate TG into the charge sensing node Se. This low-light case is illustrated in Fig. 5. Therefore, the voltage at the node Se will remain constant during the exposure time, and voltages V₁ and V₂ will be the same. The difference V₄ - V₃ is linearly proportional to the number of photo-generated charge carriers the PPD has acquired during the exposure time. Because of the low light level, the voltage on node Se remains constant until the photocharge is transferred through a clocking operation of TG.

The case for illumination levels so high that excessive photo-generated charge carriers spill over the transfer gate TG to the charge sensing node Se is illustrated in Fig. 6. At the beginning of the exposure period, the voltage of the PPD at the storage node St is set to the pinned potential VP by the reset operation. Afterwards, the voltage at St is rapidly reduced by the photocurrent until the skimming potential V_{S} of the transfer gate is reached. All additional photo-generated charge carriers are then flowing over the transfer gate and start to fill the charge sensing node Se. Due to the sub-linear device SL, the voltage at Se is decreased in a sub-linear fashion as a function of the number of overflowing photocharges. Through appropriate clocking of the reset gate (RG) and the transfer gate (TG), as indicated in Figure 6, the four values V₁, ..., V₄ can be read at the charge sensing node Se. The difference V₂- V₁ is a monotonous, sub-linear function of the number of photocharges QSe that were overflowing onto Se, and the difference V₄- V₃ is linearly proportional to the maximum number of photocharges Qmax the PPD can hold, i.e. the so-called full-well charge.

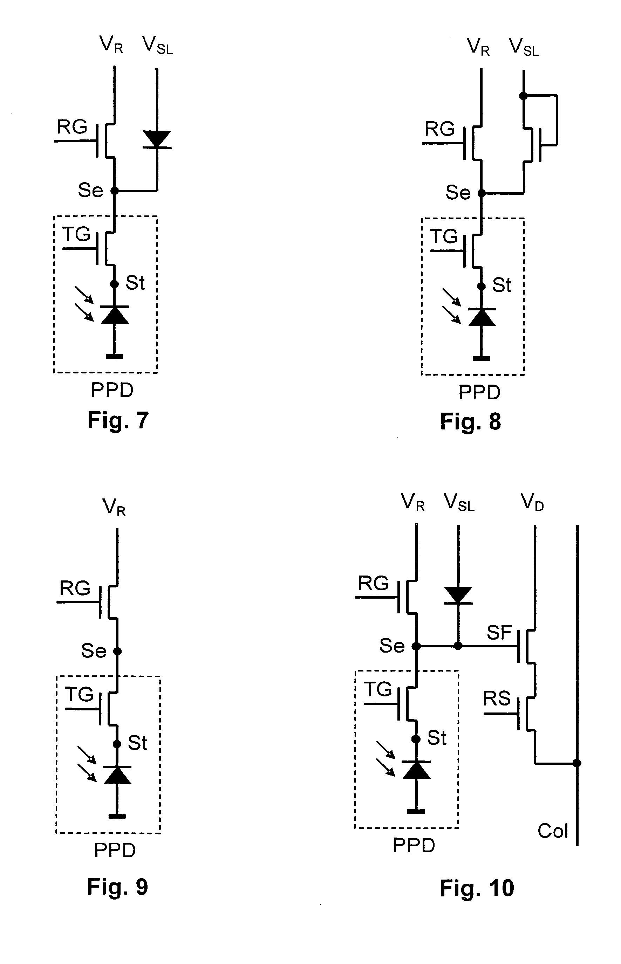

An advantageous embodiment according to the invention is illustrated in Fig. 7. The sub-linear device SL is a diode whose anode is connected to the voltage V_{SL}. As long as the diode's cathode potential at the node Se is higher than V_{SL}, the diode is reversed biased, and no current flows through the diode (apart from the dark current), so that the voltage at Se remains unaffected. Once the overflowing photocharges have reduced the potential at node Se to a value below V_{SL}, the diode begins to discharge the node Se, resulting in a logarithmic characteristic as a function of the number of photocharges present on the node Se, as indicated in US Patent No. 6,921,891. Since the value of V_{SL} can be controlled externally, the transition point from the linear regime to the logarithmic regime of the voltage at Se can be adapted according to practical requirements.

A second advantageous embodiment according to the invention is illustrated in Fig. 8. The sub-linear device SL is a transistor whose gate is connected to its drain in the so-called "diode-connected" configuration. Consequentially, gate and drain potentials are both at the voltage V_{SL}. The diode-connected transistor has a similar logarithmic voltage-to-current characteristic as a diode, so that the same modes of operation as for the diode case described above and illustrated in Fig. 7 are appropriate.

Another advantageous embodiment according to the invention is illustrated in Fig. 9. The sub-linear device SL is identical with the reset transistor, with the drain voltage of the transistor being set to a variable feed voltage. This mode of operation necessitates that for the reset operation, the voltage V_{R} is applied as feed voltage to the drain of the transistor. During exposure, the gate and the drain of the reset transistor must be both lowered to the common voltage V_{SL}, below the reset voltage V_{R} and above the skimming voltage V_{S}. In this way, the transistor is used as a switch for the reset operation, and the same transistor is used as the sub-linear device in the form of a diode-connected transistor with a logarithmic characteristic during the exposure time, as described above and illustrated in Fig. 8.

An advantageous embodiment of the photosensor according to the invention for use in a one-dimensional or a two-dimensional arrangement is illustrated in Fig. 10. The pixel employs a diode as the sub-linear device as shown in Fig. 7. The charge sensing node Se is connected to the gate of a source follower transistor SF, and the source of this transistor SF is connected through a row select transistor RS to a conducting line Col that is common to all pixels in a column of the image sensor. The row select transistor typically connects all pixels in a row to their individual column line Col, and the pixels in this row are typically read out by sequentially accessing and reading out the column lines. This advantageous architecture and mode of operation of an image sensor is described for example by E.R. Fossum, "CMOS Image Sensors: Electronic Camera-On-A-Chip", IEEE Trans. Electron Devices, Vol. 44, pp. 1689-1698, (1997).

In the embodiments shown so far, the voltage over sub-linear device SL depends logarithmically on the current flowing through the device, or, equivalently, the current increases exponentially with the applied voltage. However, any sub-linear dependence of the voltage on the current (or any superlinear dependence of the current on the voltage) will allow to compress the response of the photo sensor at elevated illumination levels.

Instead of using a PPD with an n-doped substrate, a reversed polarity device with a p-doped substrate can be used, with all voltages reversed as required.

## Claims

1. A photo sensor comprising a pinned photodiode (PPD) having a first (1) and a second (2) terminal and, between said first (1) and said second (2) terminal, having a pn-junction for generating photoinduced charge carriers and a transfer gate (TG) to release said charge carriers to said first terminal (1) **characterized in that** the photo sensor further comprises
a sub-linear device (SL) for which a voltage drop over the sub-linear device (SL) depends in sub-linear fashion on a current through the device, wherein said sub-linear device (SL) is connected in series to said pinned photodiode (PPD), and
a voltage generator (4) for feeding a control voltage to said transfer gate (TG), wherein said voltage generator (4) is adapted to generate a switch-on voltage (V_{T}) for removing all said charge carriers and a skimming voltage (V_{S}) lying between said switch-on voltage (V_{T}) and a voltage at said second terminal (2) for partially opening said transfer gate (TG).

2. The photo sensor of claim 1 wherein said sub-linear device (SL) is connected to said first terminal (1).

3. The photo sensor device of any of the preceding claims further comprising a reset circuit (3) for setting said first terminal (1) to a predefined potential.

4. The photo sensor device of claim 3 further comprising
a voltage sensor (6) for measuring a measured voltage indicative of a voltage at said first terminal (1) ,
a control circuit (5) adapted to run repetitive measuring cycles, wherein each measuring cycle comprises a first and a second phase, wherein
a) in said first phase said control circuit (5) issues a first reset command to said reset circuit (3), sets said voltage generator (4) to generate said skimming voltage (V_{S}), and operates said voltage sensor (6) to measure a first change of said measured voltage, and
b) in said second phase said control circuit (5) operates said voltage generator (4) to issue said switch-on voltage (V_{T}) and operates said voltage sensor (6) to measure a second change of said measured voltage.

5. The photo sensor of claim 4 wherein, at a beginning of said second phase, said control circuit (5) issues a second reset command to said reset circuit (3) and wherein said second change of said measured voltage corresponds to a difference V₃ - V₄ with V₃ corresponding to a voltage after said second reset command and before generating said switch-on voltage (V_{T}) and V₄ corresponding to a voltage after generating said switch-on voltage.

6. The photo sensor of any of the claims 4 or 5 wherein said first change of said measured voltage corresponds to a difference V₁ - V₂ with V₁ corresponding to a voltage at a beginning of said first phase after issuing said first reset command and V₂ corresponding to a voltage at an end of said first phase.

7. The photo sensor of any of the claims 5 or 6 adapted to add said first change and second change of said measured voltage.

8. The photo sensor of any of the claims 3 to 7 wherein said reset circuit (3) and said sub-linear device (SL) both comprise a common transistor in series to said pinned photodiode (PPD) and connected to a feed voltage, and wherein said photo sensor further comprises a control circuit (5) adapted to
a) set said feed voltage to a reset voltage (V_{R}) and applying a voltage pulse to a gate of said transistor for setting said first terminal (1) to said predefined potential, and
b) set said feed voltage and said gate of said second transistor to a common voltage (V_{SL}) below said reset voltage (V_{R}) for operating said transistor as said sub-linear device (SL).

9. The photo sensor of any of the claims 1 to 7 wherein said sub-linear device (SL) is a diode or a diode-connected transistor.

10. A photo sensor array comprising a plurality of photo sensors of any of the preceding claims.

11. A method for operating a photo sensor comprising a pinned photodiode (PPD) having a first (1) and a second (2) terminal and, between said first (1) and said second (2) terminal, having a pn-junction for generating photoinduced charge carriers and a transfer gate (TG) to release said charge carriers to said first (1) terminal **characterized in** said method comprises the following steps:
in a first phase
a) bringing said first terminal (1) to a predefined voltage (V_{R}),
b) applying a skimming voltage (V_{S}) to said transfer gate (TG), which skimming voltage (V_{S}) lies between a switch-on voltage (V_{T}) of said transfer gate (TG) and a voltage at said second terminal (2) for partially opening said transfer gate (TG),
c) feeding a current to said first terminal (1) when a voltage at said first terminal (1) falls below a given threshold, wherein said current increases superlinearly with a difference between the voltage at said first terminal (1) and said threshold, and
in a second phase
d) bringing said first terminal (1) to said predefined voltage,
e) applying the switch-on voltage (V_{T}) to said transfer gate (TG) for releasing all said charge carriers,
said method further comprising the steps of measuring a first and a second change of said voltage at said first terminal in said first phase and said second phase, respectively.
